# FASCICULE DE BREVET EUROPEEN

(11) **EP 1 886 046 B1**
(45) Date de publication et mention de la délivrance du brevet: **27.04.2011**
(21) Numéro de dépôt: 06778912.3
(22) Date de dépôt: 01.06.2006
(51) Int. Cl.: F16D 69/02, C04B 35/80, C04B 35/83, B23K 26/28, B26F 1/26

(54) **PROCEDE ET SUBSTRAT POUR LA REALISATION DE PIECES EN MATERIAU COMPOSITE PAR DENSIFICATION DE TYPE CVI ET PIECES OBTENUES**
VERFAHREN UND SUBSTRAT ZUR HERSTELLUNG ZUSAMMENGESETZTER MATERIALTEILE DURCH INFILTRATION UND VERDICHTUNG CHEMISCHEN DAMPFES SOWIE HERGESTELLTE TEILE
METHOD AND SUBSTRATE FOR MAKING COMPOSITE MATERIAL PARTS BY CHEMICAL VAPOUR INFILTRATION DENSIFICATION AND RESULTING PARTS

(30) Priorité: 02.06.2005 FR 0505580
(43) Date de publication de la demande: 13.02.2008
(73) Titulaire: Snecma Propulsion Solide, 33187 Le Haillan Cedex (FR)
(72) Inventeur: BERNARD, Bruno, F-33600 Pessac (FR); GOUJARD, Stéphane, F-33700 Merignac (FR); BERTRAND, Sébastien, F-33480 Moulis En Medoc (FR); THEBAULT, Jacques, F-33200 Bordeaux (FR)
(74) Mandataire: Joly, Jean-Jacques
(86) Numéro de dépôt international: PCT/FR2006/050499
(87) Numéro de publication internationale: WO 2006/129040

(56) Documents cités:
- EP-A- 0 202 145
- WO-A-02/28801
- FR-A- 2 616 779
- US-A- 5 866 244
- US-A1- 2002 168 505

## Description

### Arrière-plan de l'invention

La présente invention concerne la réalisation de pièces en matériau composite comprenant la formation d'un substrat fibreux et la densification de celui-ci par une matrice formée par un procédé du type infiltration chimique en phase gazeuse, ou CVI ("Chemical Vapour Infiltration"). Un domaine particulier, mais non exclusif, d'application de l'invention est la réalisation de disques de frein en matériau composite carbone/carbone (C/C), notamment pour des freins aéronautiques comprenant un assemblage de disques co-axiaux alternativement stators et rotors. L'invention est toutefois applicable à la réalisation d'autres pièces en matériau composite C/C ou en autre matériau composite, notamment en matériau composite à matrice céramique (CMC).

La densification de substrats poreux, tels que des substrats ou préformes fibreuses, par des procédés de type CVI est bien connue.

Dans un processus CVI classique, les substrats à densifier sont placés dans un four. Une phase gazeuse réactionnelle est admise dans le four pour déposer le matériau constitutif de la matrice au sein de la porosité des substrats par décomposition d'un ou plusieurs constituants de la phase gazeuse, ou réaction entre plusieurs constituants, dans des conditions de température et de pression déterminées.

On connaît aussi un procédé selon lequel un substrat à densifier est placé dans un réacteur où il est chauffé en présence d'un précurseur du matériau constitutif de la matrice. Le précurseur est présent à l'état liquide dans le réacteur et le substrat est chauffé par exemple par passage d'un courant électrique ou par couplage électromagnétique avec un inducteur, le substrat étant en fibres conductrices de l'électricité telles que des fibres de carbone. Un tel processus est décrit notamment dans les documents US 4 472 454, US 5 397 595 ou US 5 389 152 et est parfois désigné par densification par caléfaction. Le précurseur étant vaporisé au contact du substrat chauffé, il sera ici considéré que ce processus est un processus de densification de type CVI. En d'autres termes, par processus de type CVI, ou processus de type infiltration chimique en phase gazeuse, on désigne dans la présente description et dans les revendications un processus traditionnel d'infiltration chimique en phase vapeur ou un processus de densification par caléfaction.

Une difficulté majeure de ces processus de type CVI est de minimiser le gradient de densification au sein des substrats pour obtenir des pièces avec le moins possible d'inhomogénéité de propriétés dans leur volume.

En effet, le dépôt de la matrice a tendance à se former préférentiellement dans les parties superficielles des substrats rencontrées en premier par la phase gazeuse réactionnelle. Il en résulte un appauvrissement de la phase gazeuse qui parvient à diffuser au coeur des substrats et une obturation prématurée de la porosité des parties superficielles du substrat qui réduit progressivement les possibilités de diffusion à coeur de la phase gazeuse. Un gradient de densification s'établit par conséquent entre les parties superficielles et le coeur des substrats.

C'est pourquoi, notamment pour la réalisation de pièces épaisses, il est en pratique nécessaire, après avoir atteint un certain stade de densification, d'interrompre le processus pour retirer les substrats partiellement densifiés afin de réaliser un usinage de surface, ou écroûtage, permettant de ré-ouvrir la porosité superficielle. La densification peut alors être poursuivie, avec un accès plus aisé au coeur des substrats pour la diffusion de la phase gazeuse réactionnelle. Dans le cas par exemple de la réalisation de disques de freins, on procède généralement à au moins deux cycles de densification CVI (cycles I1 et I2) séparés par un écroûtage. En pratique, on observe toutefois un gradient de densification sur les pièces finalement obtenues.

Il est certes connu, pour éviter la génération d'un gradient de densification et éviter éventuellement les opérations d'écroûtage, de mettre en oeuvre un procédé de densification CVI à gradient de température, c'est-à-dire en chauffant les substrats de façon non uniforme. Un chauffage non uniforme par couplage direct entre un inducteur et un ou plusieurs substrats annulaires à densifier est décrit dans les documents US 5 846 611 et EP 0 946 461. Le dépôt de la matrice dans des zones des substrats les moins facilement accessibles par la phase gazeuse est favorisé en portant ces zones à une température plus élevée que celle d'autres parties des substrats. Toutefois, cette technique est limitée à certaines formes et natures de substrats et à certains arrangements des chargements de substrats dans le four.

Il a été proposé dans le document US 5 405 560 de favoriser l'accès de la phase gazeuse réactionnelle au sein de substrats constitués par des préformes fibreuses annulaires pour disques de frein en matériau composite C/C en ménageant des passages en forme de trous s'étendant à travers les préformes, entre leurs faces opposées. Ces trous sont ménagés par l'introduction d'aiguilles qui repoussent les fibres des préformes sans les endommager. Lors de la densification CVI, les trous offrent à la phase gazeuse un trajet raccourci pour atteindre les parties centrales des préformes. Des essais effectués par la déposante ont toutefois montré les limites de cette technique dans la minimisation du gradient de densification, comme cela est décrit plus loin. Le document parallèle FR 2 616 779 mentionne certes aussi l'éventualité d'une formation de trous par un fluide sous pression partiellement destructeur des fibres, mais recommande d'éviter un endommagement des fibres.

La formation de trous dans des ébauches de disques de frein en matériau composite C/C est aussi décrite dans le document FR 2 144 329. Toutefois, ce document concerne la densification de préformes fibreuses de disques de frein par voie liquide, c'est-à-dire par imprégnation des préformes par une résine précurseur du carbone, laquelle résine est réticulée (durcie) puis carbonisée ou graphitisée pour former la matrice carbone. Des trous sont formés après durcissement de la résine et avant carbonisation ou graphitisation pour favoriser l'évacuation d'espèces volatiles lors de la carbonisation ou graphitisation et éviter ainsi que du gaz soit piégé dans la matrice carbone. Il s'agit d'un processus totalement différent de la densification CVI.

### Objet de l'invention

L'invention a pour but de faciliter la diffusion de la phase gazeuse réactionnelle lors d'un processus de densification de type CVI afin, d'une part, de réaliser une densification quasi uniforme de substrats fibreux pour la fabrication de pièces en matériau composite et, d'autre part, de diminuer le nombre de cycles de densification séparés par une phase d'écroûtage intermédiaire, voire de réaliser une densification en un seul cycle, une réouverture de la porosité par une phase d'écroûtage intermédiaire n'étant plus indispensable.

Ce but est atteint grâce à un procédé tel que defini par la revendication 1.

Comme ceci sera montré plus loin, la formation de trous dans le substrat par enlèvement de matière avec rupture des fibres permet de façon surprenante d'obtenir une densification quasi uniforme du substrat, alors qu'un tel résultat est loin d'être obtenu lorsque les trous sont formés par insertion d'aiguilles ayant un effet non destructif sur les fibres, comme dans l'art antérieur. Il est en outre possible d'obtenir en un seul cycle un degré de densification qui, dans l'art antérieur, requiert plusieurs cycles séparés par écroûtage intermédiaire.

Les trous peuvent être formés par usinage mécanique au jet d'eau sous haute pression.

Selon un autre mode de réalisation du procédé, les trous peuvent être formés par action thermique localisée ayant un effet destructif sur la matière des fibres, éventuellement en liaison avec une exposition à un milieu oxydant. Ce peut être le cas notamment pour des fibres de carbone. L'action thermique localisée peut être produite par rayonnement lasser.

Selon encore d'autrès modes de réalisation du procédé, les trous peuvent être formés par usinage par outil à très grande vitesse tel qu'un foret, une fraise ou un foreur, ou par découpe au couteau ou avec un poinçon ou emporte-pièce, ou encore par électro-érosion.

Les trous peuvent traverser le substrat, entre deux surfaces de celui-ci ou être des trous borgnes s'ouvrant sur une surface seulement du substrat.

Par ailleurs, les trous peuvent être formés en direction orthogonale par rapport à une surface du substrat sur laquelle ils débouchent, ou en direction non orthogonale.

Dans le cas d'un substrat formant une préforme annulaire pour un disque de frein, les trous formés peuvent être des trous débouchant sur l'une au moins des faces principales de la préforme perpendiculaires à l'axe de celle-ci, ou des trous débouchant sur la surface périphérique externe et éventuellement sur la surface interne, les trous étant alors orientés en direction radiale ou sensiblement radiale, ou une combinaison de ces deux types de trous.

Le diamètre moyen des trous est choisi pour éviter qu'ils soient obturés par le dépôt du matériau de la matrice avant la fin du processus de densification de type CVI. Un diamètre moyen compris environ entre 0,05 mm et 2 mm peut par exemple être choisi. Les trous sont de petit diamètre et, après densification, n'ont aucun rôle fonctionnel, tel qu'un rôle de refroidissement lors d'une utilisation ultérieure dans le cas d'un disque de frein.

La densité des trous est choisie suffisante pour offrir un trajet court à la phase gazeuse réactionnelle vers toutes parties du substrat que l'on souhaite densifier de façon quasi uniforme. Une densité comprise environ entre 0,06 trous/cm² et 4 trous/cm² peut par exemple être choisie, cette densité étant mesurée en nombre de trous par unité de surface dans un plan médian ou une surface médiane du substrat. Exprimé autrement, la distance, ou pas, entre axes de trous voisins est de préférence comprise environ entre 0,5 cm et 4 cm.

La densité des trous dans le substrat fibreux peut être constante afin d'offrir un court trajet à la phase gazeuse réactionnelle de la même façon vers toutes les parties du substrat à densifier. En variante, cette densité peut être variable et on pourra alors choisir une densité plus importante dans des parties du substrat où, en l'absence de trous, le trajet de la phase gazeuse est plus long et l'apport de matrice est plus faible au coeur du substrat, et choisir une densité plus réduite, voire nulle, dans des parties du substrat où, même en l'absence de trous, l'apport de matrice est suffisamment élevé. Ainsi, dans le cas de substrats formant des préformes annulaires pour des disques de frein, en particulier des disques de frein aéronautique, avec des trous débouchant sur l'une au moins des faces principales du substrat, la densité des trous pourra être variable et décroissante entre une partie centrale du substrat correspondant à une piste de frottement du disque, et des parties du substrat adjacentes à ses surfaces circonférentielles externe et interne. On pourra même ne former des trous que dans la partie centrale du substrat correspondant à la piste de frottement du disque de frein à réaliser.

L'invention vise aussi un substrat fibreux pour la réalisation d'une pièce en matériau composite, comportant des trous qui s'étendent dans le substrat à partir d'au moins une surface de celui-ci, substrat dans lequel la densité volumique des fibres au voisinage des parois des trous du substrat n'est pas sensiblement supérieure à la densité volumique des fibres dans d'autres parties du substrat, et

les trous sont délimités par des zones limites de rupture ou d'élimination des fibres.

L'invention vise encore une pièce en matériau composite comprenant un renfort fibreux densifié par une matrice obtenue au moins partiellement par un processus de type infiltration chimique en phase gazeuse et présentant des trous qui s'étendent dans la pièce à partir d'au moins une surface de celle-ci, pièce dans laquelle, le renfort fibreux est formé par un substrat tel que défini plus haut.

### Brève description des dessins

L'invention sera mieux comprise à la lecture de la description faite ci-après, à titre indicatif mais non limitatif, en préférence aux dessins annexés, sur lesquels :
- la figure 1 montre les étapes successives de réalisation d'une pièce en matériau composite selon un mode de mise en oeuvre d'un procédé conforme à invention ;
- la figure 2 montre schématiquement, en perspective, une préforme fibreuse annulaire de disque de frein dans laquelle des trous sont formés ;
- la figure 3 est une vue partielle en coupe à échelle agrandie selon le plan III de la figure 2 ;
- les figures 4 à 6 sont des vues en coupe montrant des variantes de formation de trous débouchant sur au moins une face principale d'une préforme fibreuse annulaire de disque de frein ;
- les figures 7 à 10 montrent des variantes d'arrangements de trous à la surface d'un substrat fibreux ;
- les figures 11 et 12 sont des vues montrant des variantes de formation de trous débouchant au moins sur la face périphérique externe d'une préforme annulaire de disque de frein ;
- la figure 13 montre schématiquement un disque de frein obtenu après densification, CVI et usinage final, avec une préforme telle que celle de la figure 2 ;
- la figure 14 est une vue en plan d'une préforme fibreuse de disque rotor de frein aéronautique dans laquelle des trous ont été formés avec une densité variable ;
- la figure 15 montre très schématiquement un chargement en pile de préformes fibreuses annulaires de disques de frein dans un four de densification CVI ; et
- la figure 16 montre des courbes représentant la variation, entre les circonférences intérieure et extérieure, de la densité d'un disque obtenu après densification de la préforme de la figure 14, et, à titre comparatif, de la densité d'un disque obtenu après densification d'une préforme semblable dans laquelle des trous n'ont pas été formés.

### Description détaillée de modes de réalisation de l'invention

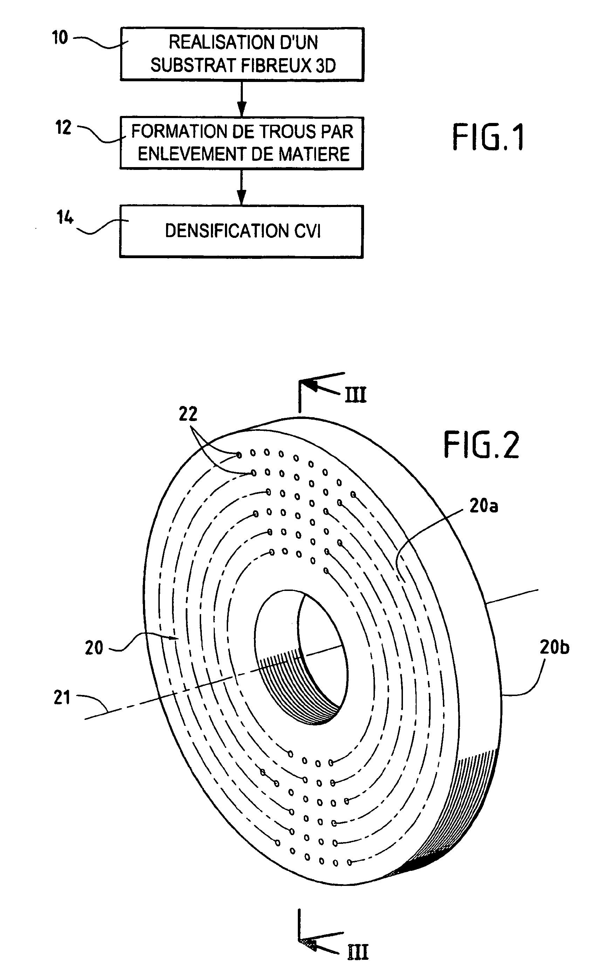

Une première étape 10 du procédé montré sur la figure 1 consiste à réaliser un substrat fibreux tridimensionnel (3D), ou préforme fibreuse, ayant une forme voisine de celle d'une pièce en matériau composite à obtenir. Les techniques de réalisation de telles préformes fibreuses sont bien connues.

Il est possible de partir d'éléments fibreux unidimensionnels (1D) tels que des fils ou câbles qui sont bobinés sur une forme ou un mandrin ou qui sont utilisés pour former un substrat 3D directement par tissage, tricotage ou tressage tridimensionnels.

On peut aussi partir de textures fibreuses bidimensionnelles (2D) telles que des tissus, tricots, tresses à plat, feutres minces, nappes unidirectionnelles (UD) formées de fils ou câbles parallèles entre eux, ou encore nappes multidirectionnelles (nD) formées de nappes UD superposées dans des directions différentes et liées entre elles par exemple par aiguilletage léger ou par couture. Des strates formées de telles textures 2D sont superposées par bobinage sur une forme ou un mandrin ou par drapage sur une forme ou un support, et sont liées entre elles par exemple par aiguilletage, par couture ou par implantation de fils à travers les strates, pour obtenir un substrat 3D.

Un substrat 3D peut encore être obtenu sous forme de feutre épais réalisé par aiguilletage de fibres discontinues orientées aléatoirement.

Un substrat 3D ainsi obtenu peut être utilisé directement en tant que préforme fibreuse d'une pièce à obtenir. On peut aussi former une préforme fibreuse souhaitée par découpe d'un substrat 3D afin d'obtenir la forme voulue.

Les fibres constitutives de la préforme sont choisies en fonction de l'application de la pièce en matériau composite à réaliser. Dans le cas de matériaux composites thermostructuraux, c'est-à-dire de matériaux ayant de bonnes propriétés mécaniques et une capacité à les conserver à des températures élevées, les fibres du renfort fibreux du matériau sont typiquement en carbone ou en céramique. La préforme peut être réalisée à partir de telles fibres, ou à partir de fibres en précurseur de carbone ou de céramique qui peuvent être plus aptes à supporter diverses opérations textiles pour la réalisation de substrats fibreux 3D. Dans ce dernier cas, la transformation du précurseur en carbone ou en céramique est réalisée après formation du substrat ou de la préforme, habituellement par traitement thermique.

Une deuxième étape 12 du procédé consiste à former dans la préforme des trous destinés à faciliter l'accès d'une phase gazeuse réactionnelle au coeur de la préforme lors d'une densification de type CVI ultérieure. Lorsque la préforme est réalisée en fibres en un matériau obtenu par transformation d'un matériau précurseur, les trous peuvent être formés dans la préforme après transformation du précurseur ou avant cette transformation. Dans le dernier cas, il sera tenu compte d'un retrait dimensionnel éventuel lors de la transformation du précurseur pour obtenir des dimensions de trous souhaitées.

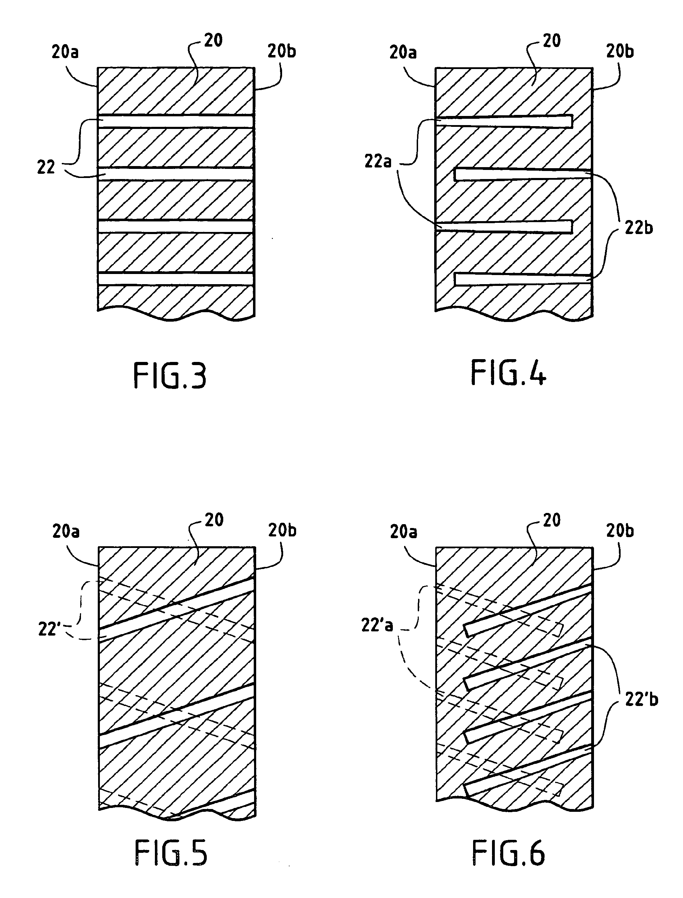

Les figures 2 et 3 montrent une préforme fibreuse annulaire 20 en fibres de carbone pour fabrication d'un disque de frein en matériau composite C/C. Une telle préforme peut être obtenue par découpe d'un substrat fibreux 3D en forme de plaque réalisé par exemple par superposition et aiguilletage de strates de tissu ou de nappes unidirectionnelles ou multidirectionnelles en fibres de polyacrylonitrile (PAN) préoxydé, précurseur de carbone. La préforme peut aussi être obtenue par superposition et aiguilletage de strates annulaires découpées dans des tissus ou des nappes unidirectionnelles ou multidirectionnelles en fibres de PAN préoxydé. Après formation de la préforme annulaire en fibres de PAN préoxydé, la transformation du PAN préoxydé en carbone est réalisée par traitement thermique. On pourra se référer par exemple aux documents US 4 790 052 et US 5 792 715.

Des trous 22 sont formés dans la préforme 20 parallèlement à son axe 21 et s'étendent sur toute son épaisseur entre les faces principales opposées 20a et 20b sur lesquelles ils débouchent, faces qui sont perpendiculaires à l'axe 21.

En variante, comme montré sur la figure 4, des trous borgnes 22a, 22b sont formés dans la préforme, les trous 22a débouchant uniquement sur la face 20a tandis que les trous 22b débouchent uniquement sur la face 20b. On note toutefois que les trous 22a, 22b s'étendent sur une très grande partie de l'épaisseur de la préforme.

Selon une autre variante, les trous peuvent être formés en biais, c'est-à-dire avec leurs axes formant un angle non nul par rapport à la normale aux faces 20a, 20b ou à l'axe de la préforme 20, qu'il s'agisse de trous traversants 22' (figure 5) ou de trous borgnes 22'a, 22'b (figure 6).

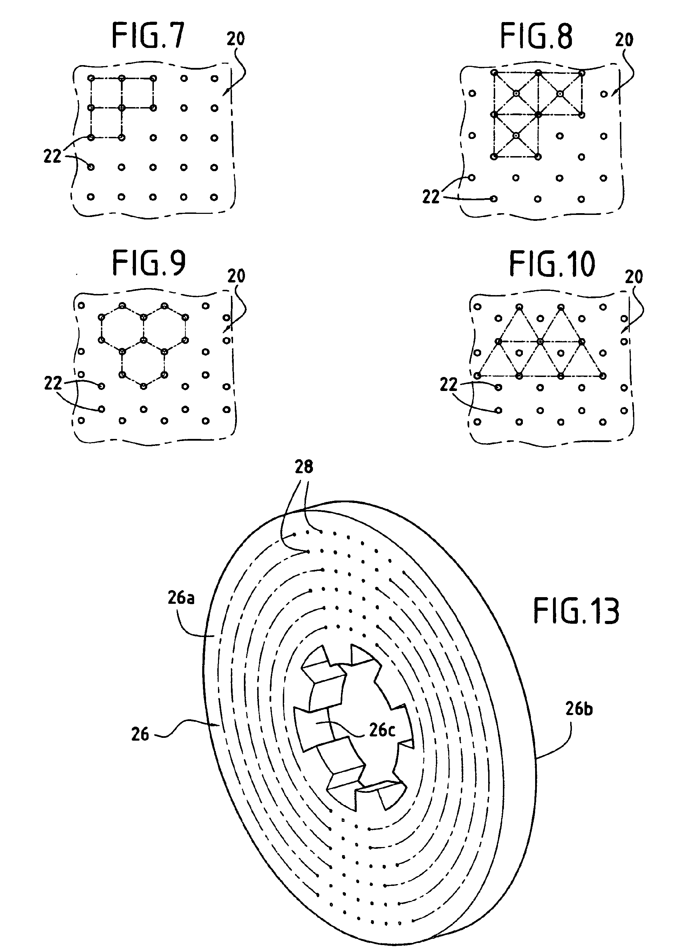

Sur la figure 2, les trous 22 sont disposés à intervalles réguliers le long de cercles concentriques. Ils pourraient être disposés le long d'une ligne en spirale. En outre, que les préformes fibreuses 20 soient annulaires ou aient d'autres formes, les trous 22 pourront être disposés selon encore d'autres motifs, par exemple aux sommets de quadrangles (figure 7), aux sommets et aux centres de quadrangles (figure 8), aux sommets d'hexagones (figure 9), ou aux sommets de triangles équilatéraux (figure 10). Pour une densité de trous donnée, cette dernière disposition est la plus favorable pour que le trajet d'une phase gazeuse vers tout point de la préforme, à partir des trous, soit minimum.

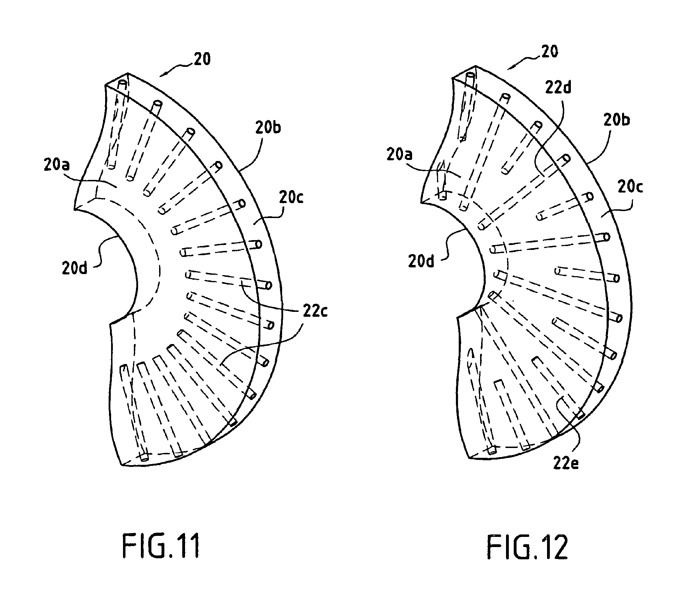

Les figures 11 et 12 illustrent un autre mode de réalisation selon lequel des trous sont formés qui débouchent non pas sur l'une et/ou l'autre des faces principales 20a, 20b de la préforme 20, mais sur la surface périphérique ou circonférentielle externe 20c et, éventuellement, sur la surface circonférentielle interne 20d, les trous s'étendant en direction radiale ou sensiblement radiale.

Dans le cas de la figure 11, des trous 22c sont formés dans la partie médiane du disque. Les trous débouchent sur la surface externe 20c et s'étendent radialement sur la plus grande partie de la distance entre la surface 20c et la surface circonférentielle interne 20d, sans déboucher sur cette dernière.

Dans le cas de la figure 12, des trous 22d, 22e sont formés dans la partie médiane du disque, les trous 22d étant des trous traversants s'étendant radialement entre la surface 20c et la surface 20d tandis que les trous 22e sont des trous non traversants débouchant uniquement sur la surface 20c et s'étendant radialement sur une partie, environ la moitié, de la distance entre les surfaces 20c, 20d.

Les trous 22e alternent avec les trous 22d et visent à limiter l'hétérogénéité de la densité de trous entre les surfaces 20c et 20d. Pour la même raison, des trous intermédiaires de profondeur limitée pourraient aussi être prévus dans le cas de la figure 11.

Bien que les figures 11 et 12 montrent des trous formant une seule rangée dans la partie médiane du disque, on pourra bien entendu, en fonction de l'épaisseur du disque, prévoir plusieurs rangées de trous.

Selon une caractéristique du procédé conforme à l'invention, les trous sont formés dans la préforme par enlèvement de matière.

On peut utiliser à cet effet une technique de forage par jet d'eau sous pression qui peut être utilisée pour former des trous traversants ou des trous borgnes. L'eau utilisée peut être ou non chargée de particules solides. Le forage peut être réalisé en une ou plusieurs impulsions de jet d'eau, ou de façon continue. Lorsque le diamètre des trous est relativement grand par rapport à celui du jet, le forage d'un trou peut être réalisé par détourage, c'est-à-dire par découpe le long de la circonférence des trous à réaliser. Selon la mise en oeuvre de la technique de forage, les trous peuvent présenter une forme légèrement tronconique comme montré sur les figures 4 et 6. Le diamètre des trous est alors croissant à partir de la face du côté de laquelle l'usinage par jet d'eau est pratiqué en raison d'une dispersion du jet d'eau ou principalement parce que l'eau chargée des débris solides d'usinage est plus abrasive. Dans le cas de trous traversants, environ 50% des trous seront alors usinés à partir d'une face et les autres trous à partir de l'autre face de manière à avoir une densité de vides créés par les trous sensiblement uniforme dans toute l'épaisseur de la préforme. Dans le même but, dans le cas de la figure 4, environ le même nombre de trous sont formés à partir de chaque face de la préforme.

Une autre technique possible de formation de trous, convenant dans le cas où le matériau des fibres est éliminable par la chaleur, est de produire une action thermique localisée, notamment par rayonnement laser. Avec en particulier des fibres carbone, cette action thermique sous milieu oxydant, par exemple sous air, permet une élimination par oxydation de la matière des fibres. Des sources lasers de différents types peuvent être utilisées, par exemple du type à dioxyde de carbone ou du type YAG. L'utilisation d'un rayonnement laser permet un contrôle de la profondeur des trous, dans le cas de trous non traversants, permet une réalisation des trous par détourage, et permet de contrôler aisément l'orientation des trous.

D'autres techniques encore sont utilisables pour former les trous par enlèvement de matière. On pourra avoir recours à des techniques d'usinage par outil entraîné à grande vitesse, tel que foret, foreur ou fraise, à la découpe par couteau, poinçon ou emporte-pièce, ou à l'électro-érosion. De telles techniques d'usinage sont bien connues.

La formation des trous par enlèvement de matière au moyen des techniques mentionnées ci-avant a un effet destructif sur les fibres de la préforme mais sans modifier l'arrangement des fibres au voisinage des parois des trous par rapport à l'arrangement initial avant formation des trous. Ainsi, la matière située initialement aux emplacements des trous étant avantageusement entièrement enlevée ou éliminée, les trous formés sont délimités par des zones limites de rupture ou d'élimination des fibres et la densité volumique des fibres de la préforme au voisinage des parois des trous n'est pas augmentée, contrairement à ce qui serait le cas si les trous étaient formés par insertion d'aiguilles repoussant les fibres dans les zones de parois des trous.

Lors du processus ultérieur de densification de type CVI, l'accès de la phase gazeuse réactionnelle au coeur du matériau de la préforme fibreuse n'est pas restreint à travers les parois des trous, en comparaison avec les surfaces externes de la préforme, comme ce serait le cas si les fibres étaient repoussées dans les zones de parois des trous lors de la formation des trous conduisant alors à une augmentation locale de la densité volumique de fibres à la surface des trous et à une obturation prématurée des parois des trous lors de la densification. Une telle obturation prématurée des parois des trous, qui priverait ceux-ci de leur efficacité, est ainsi évitée pendant le cours du processus de densification.

Dans la préforme, ainsi que dans la pièce en matériau composite obtenue après densification par processus de type CVI, la densité volumique de fibres, au voisinage des parois des trous, n'est pas sensiblement supérieure à la densité volumique de fibres dans d'autres parties de la préforme et de la pièce. On ne crée pas ainsi une inhomogénéité dans les propriétés du matériau composite.

Le diamètre moyen des trous est choisi suffisamment grand pour éviter qu'ils soient obturés avant la fin de la densification de type CVI et ne remplissent alors plus leur fonction, mais tout en restant limité pour ne pas affecter le comportement de la pièce en matériau composite obtenue après densification, et ce d'autant qu'à partir d'une certaine valeur de diamètre, l'accès pour la phase gazeuse n'est pas réellement amélioré même en fin de processus de type CVI.

Ce diamètre moyen pourra donc varier en fonction de l'épaisseur de matrice à déposer sur les fibres, des dimensions de la pièce à réaliser et de l'utilisation de celle-ci.

D'une façon générale, et en particulier pour des préformes de disques de freins aéronautiques, le diamètre moyen des trous pourra être choisi égal à une valeur comprise entre environ 0,05 mm et 2 mm.

La densité des trous est choisie suffisante, en liaison avec leur diamètre, pour offrir un trajet court à la phase gazeuse réactionnelle vers n'importe quelle partie de la préforme lors de la densification de type CVI, mais tout en restant limitée pour ne pas affecter le comportement de la pièce en matériau composite obtenue après densification. Cette densité pourra être adaptée aux dimensions de la pièce à réaliser et à son utilisation.

D'une façon générale, et en particulier pour des préformes de disques de freins aéronautiques, la densité des trous pourra être choisie égale à une valeur comprise entre environ 0,06 trous/cm² et 4 trous/cm². Dans le cas des figures 2 à 6, cette densité est mesurée dans un plan médian de la préforme pour couvrir les cas où des trous borgnes sont formés. Elle peut être mesurée aussi sur une face dans le cas de trous traversants comme sur les figures 3 et 5. Dans le cas des figures 11 et 12, la densité est non constante et on pourra alors prendre en compte une densité moyenne.

Dit d'une autre façon, on choisit de préférence pour la distance, ou pas, entre axes de trous voisins, une valeur comprise entre 0,5 cm et 4 cm. Dans le cas des figures 11 et 12, il s'agit d'un pas moyen.

Le diamètre des trous dans une même préforme pourra être constant ou non.

De même, la densité des trous dans une même préforme pourra être constante ou variable.

Après formation des trous, la densification de la préforme est réalisée par un processus de type CVI (étape 14). Les processus de densification de type CVI par des matrices en carbone ou en céramique sont bien connus. On utilise un précurseur adapté à la nature du matériau de matrice à déposer.

Selon les cas, en particulier en fonction de l'épaisseur de la préforme à densifier et de la densité à atteindre, un écroûtage au moins des faces exposées de la préforme pourra au non être souhaitable. Si un tel écroûtage est réalisé, l'étape 14 comprend un premier cycle de densification I1 suivi d'un usinage de surface de la préforme et d'un deuxième cycle de densification I2.

La figure 13 montre un disque de frein 26 tel qu'obtenu après densification de type CVI d'une préforme telle que celle de la figure 2 et usinage aux dimensions finales avec formation d'encoches 26c et tenons 26d permettant la liaison mécanique du disque. Il s'agit dans cet exemple d'un disque stator pour frein d'avion ayant deux faces frottantes opposées 26a, 26b. On notera que des trous 28 correspondant aux trous formés dans la préforme sont visibles. Toutefois, en raison de leur faible diamètre, les trous ne jouent pas de rôle fonctionnel, tel qu'une fonction de refroidissement, lors de l'utilisation ultérieure du disque de frein.

Dans l'exemple illustré par les figures 2 et 7, des trous sont formés dans tout le volume. On pourra en variante limiter la formation des trous à certaines zones de la préforme ou avoir une plus grande densité de trous dans certaines zones, par exemple, dans le cas d'un disque de frein, les zones correspondant aux faces frottantes, et éventuellement les zones correspondant aux tenons de liaison mécanique du disque.

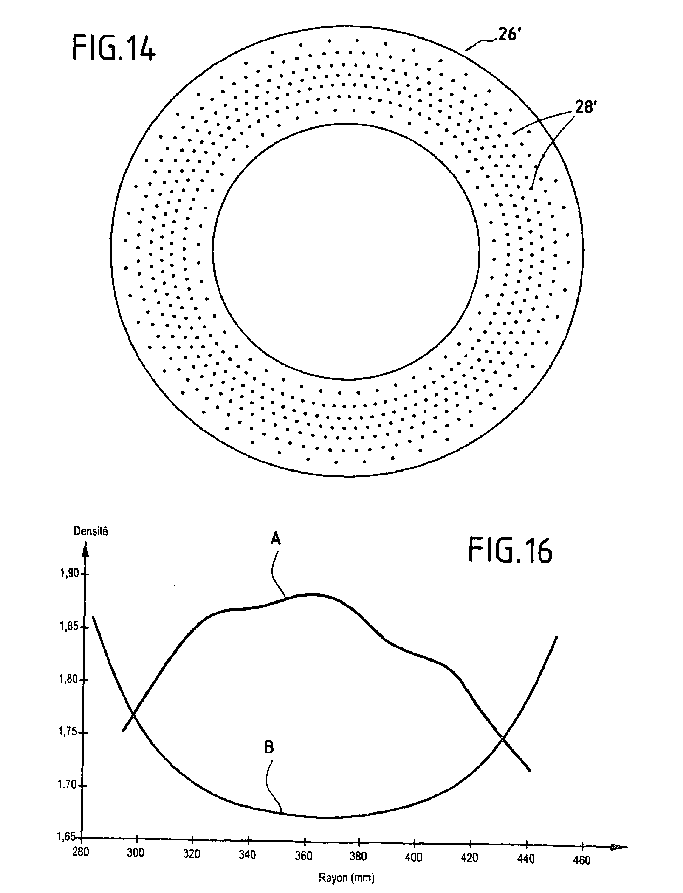

Ainsi, la figure 14 montre schématiquement un disque de frein d'avion 26' avant usinage final, tel qu'obtenu après densification d'une préforme annulaire dans laquelle des trous ont été formés avec une densité variable, les trous étant des trous traversants parallèles à l'axe du disque et s'ouvrant sur les faces principales de la préforme. Comme le montre la disposition des trous 28' subsistant après la densification, la densité des trous formés dans la préforme était maximale au niveau de la piste de frottement du disque, dans la partie centrale de celui-ci, avec décroissance de cette densité entre cette partie centrale et les parties adjacentes aux surfaces circonférentielles interne et externe du disque. On a favorisé ainsi une densification uniforme dans la partie du disque utile pour le freinage. Dans certains cas, on pourra envisager la formation de trous visant à favoriser la densification aussi dans des parties de la préforme autres que celles correspondant à la piste de frottement du disque, par exemple dans les parties de la préforme correspondant aux reliefs ou tenons formés dans la partie circonférentielle interne ou externe pour la liaison mécanique du disque avec un organe fixe ou rotatif.

Bien que l'on ait envisagé le cas de préformes fibreuses annulaires pour disques de frein, il est clair que l'invention est applicable à tous types de préformes destinées à la réalisation de pièces en matériau composite, en particulier de pièces épaisses pour lesquelles le problème d'une densification uniforme se pose.

En outre, l'invention est applicable indépendamment de la nature des fibres des préformes et de la matrice déposée pour les densifier par processus de type CVI.

On notera encore que la densification de la préforme fibreuse perforée selon l'invention peut comporter une première phase de densification partielle par voie liquide avant une deuxième phase de densification de type CVI. La densification par voie liquide, comme cela est bien connu, consiste à réaliser au moins un cycle d'imprégnation de la préforme par une composition liquide contenant un précurseur liquide du matériau de la matrice. Le précurseur est typiquement une résine, par exemple une résine organique précurseur de carbone. Après séchage, pour élimination d'un solvant éventuel, et polymérisation de la résine, un traitement thermique de transformation du précurseur est réalisé.

### Exemple 1

Des préformes annulaires fibreuses en fibres de carbone pour des disques de frein aéronautique en matériau composite C/C ont été réalisées de la façon suivante.

Des nappes multidirectionnelles ont été obtenues par superposition de trois nappes unidirectionnelles en fibres de PAN préoxydé faisant entre elles des angles de ± 60° et liées entre elles par aiguilletage. Les nappes multidirectionnelles ont été superposées et aiguilletées au fur et à mesure de leur superposition pour obtenir une plaque aiguilletée dans laquelle ont été découpées des préformes annulaires en PAN préoxydé.

Les préformes en PAN préoxydé ont été soumises à un traitement thermique à environ 1600°C pour transformer le PAN en carbone. On a obtenu alors des préformes annulaires en fibres de carbone ayant des diamètres intérieur et extérieur de 26 cm et de 48 cm, une épaisseur de 3,5 cm et un taux volumique de fibres de 23% environ, le taux volumique de fibres étant le pourcentage occupé par les fibres du volume apparent de la préforme.

Certaines préformes ont été percées de trous traversants parallèlement à l'axe, formés par jet d'eau sous pression, avec une densité sensiblement constante de 1 trou/cm² environ. Des préformes ont été ainsi obtenues avec des trous de diamètres respectifs de 0,2 mm environ pour des préformes A1, A2, de 0,5 mm environ pour des préformes B1, B2 et de 1 mm environ pour des préformes C1, C2.

A titre de comparaison, des trous ont été ménagés dans une autre préforme D par insertion d'aiguilles de diamètre égal à 2 mm, avec une densité de 1 trou/cm² environ, les aiguilles étant ensuite retirées en vue de la densification CVI.

On a formé un chargement de préformes en forme de pile annulaire composée essentiellement de préformes E non percées, en insérant des préformes A1, A2, B1, B2, C1, C2 dans la pile entre deux préformes E1 et E2 non percées.

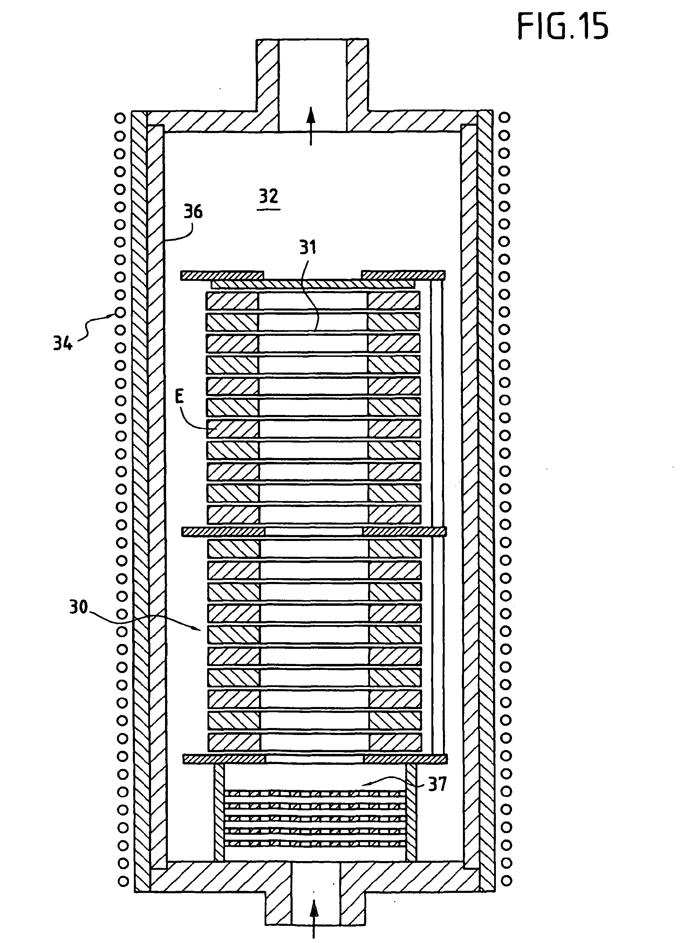

La figure 15 montre un tel chargement en pile 30 introduit dans la chambre de réaction 32 d'un four de densification CVI pour réaliser une densification CVI du type "à flux dirigé" comme décrit dans le document US 5 904 957. Brièvement, le four est chauffé par couplage inductif entre un inducteur 34 et un suscepteur en graphite 36 délimitant la chambre de réaction avec interposition d'un isolant entre inducteur et suscepteur. Une phase gazeuse réactionnelle est admise à travers le fond du suscepteur 36, traverse une zone de préchauffage 37 et est dirigée dans le volume interne 31 de la pile fermé à sa partie supérieure. La phase gazeuse s'écoule vers le volume interne de la chambre 32 à l'extérieur de la pile 30 en passant dans des intervalles ménagés par des entretoises (non représentées) entre les préformes, et en diffusant à travers celles-ci. Le gaz effluent est extrait à travers le couvercle du suscepteur par aspiration au moyen d'un groupe de pompage qui établit le niveau désiré de pression dans la chambre.

La densification CVI des substrats par une matrice de carbone pyrolytique a été réalisée en utilisant une phase gazeuse réactionnelle à base de gaz naturel, sous une pression d'environ 5kPa et à une température d'environ 1000°C.

La densification a été réalisée en deux cycles I1, I2 séparés par une opération d'écroûtage pour laquelle le chargement a été retiré du four. Le cycle I1 a été réalisé dans des conditions prédéterminées permettant de porter la densité des préformes E à une valeur d'environ 1,6. Après écroûtage par usinage des faces principales des préformes partiellement densifiées pour les amener à une épaisseur proche de celle des disques à réaliser, le cycle I2 a été réalisé dans des conditions prédéterminées pour porter la densité à environ 1,8. Pour le cycle I2, le chargement du four a été réalisé en plaçant à nouveau les préformes E1, A1, A2, B1, B2, C1, C2 et E2 partiellement densifiées dans cet ordre.

On a procédé de la même façon à une densification en deux cycles I1 et I2 d'un chargement en pile formé de substrats de type E, à l'exception d'un substrat D inséré dans la pile, adjacent à un substrat E3.

Le tableau I ci-après indique les valeurs de densité mesurées pour les disques A1, A2, B1, B2, C1, C2, E1 et E2 après les cycles I1 et I2 et pour les disques E3 et D après le cycle I2. On constate que les densités finales obtenues pour les disques A1, A2, B1, B2, C1 et C2 sont sensiblement supérieures à celles des disques D, E1 et E2, et que la densité des disques D est loin d'être augmentée dans les mêmes proportions en fin de cycle 12, par rapport à la densité du disque E3.

**Tableau I**

| Préforme de départ | Trous | Densité en fin de cycle I1 | Densité en fin de cycle I2 |
|---|---|---|---|
| E1 | Néant | 1,58 | 1,81 |
| A1 | Ø 0,2 mm | 1,59 | 1,88 |
| A2 | Ø 0,2 mm | 1,56 | 1,88 |
| B1 | Ø 0,5 mm | 1,56 | 1,89 |
| B2 | Ø 0,5 mm | 1,57 | 1,89 |
| C1 | Ø 0,1 mm | 1,57 | 1,89 |
| C2 | Ø 1 mm, | 1,59 | 1,89 |
| E2 | Néant | 1,61 | 1,80 |
| E3 | Néant | | 1,79 |
| D | Insertion aiguilles Ø 2 mm | | 1,81 |

Afin de vérifier l'existence ou non d'un gradient de densification, on a découpé dans les disques A1, E1, D et E2 obtenus après le cycle I2, des blocs de forme sensiblement parallélépipédique le long d'un rayon des disques. Pour chaque bloc, la densité a été mesurée en différentes zones Z1 à Z5 entre le diamètre intérieur et le diamètre extérieur, au voisinage d'une face, au voisinage d'une autre face, et dans la partie radiale médiane.

Le tableau II ci-après indique les valeurs de densité relevées. On relève le résultat remarquable obtenu avec le disque A1 réalisé selon l'invention puisque la densité est pratiquement uniforme (variation de moins de 1,7%).

Avec les disques E1 et E3 obtenus à partir d'une préforme sans trous, une variation importante de densité est observée, traduisant l'existence d'un assez fort gradient de densification en dépit de l'écroûtage intermédiaire (variation de 8,1% et 7,7% respectivement).

Une variation de densité de 6% est mesurée sur le disque D, variation inférieure à celle observée sur les disques E1 et E3, mais néanmoins encore très substantielle.

**Tableau II**

| Préforme de départ | Trous | Densité en fin de cycle I2 | | | | |
|---|---|---|---|---|---|---|
| | | Z1 | Z2 | Z3 | Z4 | Z5 (rayon extérieur) |
| face | | 1,86 | 1,87 | 1,88 | 1,87 | 1,87 |
| A1 centre | Ø 0,2 mm | 1,86 | 1,86 | 1,86 | 1,85 | 1,85 |
| face | | 1,87 | 1,87 | 1,87 | 1,86 | 1,86 |
| face | | 1,83 | 1,77 | 1,78 | 1,79 | 1,84 |
| E1 centre | néant | 1,80 | 1,69 | 1,70 | 1,69 | 1,78 |
| face | | 1,81 | 1,76 | 1,76 | 1,78 | 1,82 |
| face | Insertion | 1,82 | 1,79 | 1,77 | 1,79 | 1,80 |
| D centre | aiguilles | 1,77 | 1,72 | 1,71 | 1,72 | 1,79 |
| face | Ø 2mm, | 1,79 | 1,77 | 1,76 | 1,78 | 1,79 |
| face | | 1,80 | 1,78 | 1,75 | 1,77 | 1,81 |
| E3 centre | néant | 1,75 | 1,70 | 1,67 | 1,71 | 1,78 |
| face | | 1,75 | 1,73 | 1,74 | 1,76 | 1,81 |

Ainsi le procédé selon l'invention est remarquable en ce qu'il permet d'accroître le degré de densification (donc, pour un même objectif de densité, de diminuer le temps de densification), tout en éliminant quasiment le gradient de densification, résultats que le procédé de l'art antérieur (formation de trous par insertion d'aiguilles) ne permet pas d'obtenir.

### Exemple 2

On a procédé sensiblement comme dans l'Exemple 1, mais sans écroûtage intermédiaire, en formant un chargement en pile de préformes annulaires en fibres de carbone pour disques stators et disques rotors avec différentes épaisseurs de préformes, entre 24 mm et 36 mm, et avec des préformes perforées au jet d'eau sous pression (trous de 0,5 mm de diamètre avec une densité sensiblement constante de 1 trou/cm²) et des préformes non perforées.

On a réalisé un cycle de densification CVI par matrice pyrocarbone avec interruption à 3/4 de sa durée totale pour mesurer la densité des préformes partiellement densifiées. Le tableau III ci-après donne les valeurs de densités moyennes mesurées intermédiaire et finale au bout de 3/4 de la durée du cycle et en fin de cycle.

**Tableau III**

| Préforme | Type de disque | Epaisseur (mm) | Densité intermédiaire | Densité finale |
|---|---|---|---|---|
| Non perforée | Stator | 24 | 1.65 | 1.74 |
| | | 30 | 1.65 | 1.72 |
| | | 36 | 1.68 | 1.70 |
| | Rotor | 28.5 | 1.71 | 1.75 |
| | | 33 | 1.71 | 1.77 |
| Munie de trous | Stator | 24 | 1.66 | **1.79** |
| | | 30 | 1.69 | **1.80** |
| | | 36 | 1.73 | **1.82** |
| | Rotor | 28.5 | 1.75 | **1.83** |
| | | 33 | 1.74 | **1.83** |

L'objectif de densité désirée (1.78) n'est pas atteint au stade intermédiaire, mais une densité supérieure est observée avec les préformes munies de trous. En fin de cycle, l'objectif est atteint dans tous les cas pour les préformes munies de trous (valeurs en gras) et n'est atteint dans aucun cas pour les préformes non perforées.

Cet exemple montre que des disques de frein en matériau composite C/C de densité requise peuvent être obtenus en un seul cycle, sans écroûtage intermédiaire grâce à la formation de trous dans la préforme selon l'invention.

### Exemple 3

On a procédé sensiblement comme dans l'Exemple 1, mais sans écroûtage intermédiaire (un seul cycle de densification d'une durée quasi identique à celle du cycle de l'Exemple 2), en formant un chargement en pile de préformes annulaires en fibres de carbone pour disques de frein, comprenant des préformes non perforées et des préformes perforées avec des densités de trous différentes. Les trous étaient des trous traversants parallèles à l'axe et de diamètre de 0,5 mm et ont été formés au jet d'eau sous pression suivant un motif formant un réseau carré comme sur la figure 7.

Le cycle a été interrompu au bout de 2/3 de sa durée totale pour mesurer la densité intermédiaire moyenne alors atteinte. Le tableau IV ci-après donne les valeurs de densité moyenne mesurées intermédiaire et en fin de cycle avec des préformes présentant différentes densités de trous. La vitesse d'accroissement de densité entre l'interruption intermédiaire et la fin du cycle est également indiquée (en point de densité par heure), représentant la cinétique de dépôt sur ces dernières heures.

**Tableau IV**

| Trous | Densité intermédiaire | Densité en fin de cycle | Vitesse d'accroissement de densité (point de densité/h) |
|---|---|---|---|
| Aucun | 1.661 | 1.772 | 6.27 x 10⁻⁴ |
| Réseau 2cm x 2cm | 1.650 | 1.793 | 8.08 x 10⁻⁴ |
| Réseau 1.5cm x 1.5cm | 1.661 | 1.817 | 8.81 x 10⁻⁴ |
| Réseau 1cm x 1cm | 1.690 | 1.852 | 9.15 x 10⁻⁴ |

On constate que l'augmentation de la densité des trous se traduit par une cinétique de dépôt plus élevée dans la partie finale du cycle de densification.

### Exemple 4

On a procédé sensiblement comme dans l'Exemple 1, mais sans écroûtage intermédiaire en formant un chargement en pile de préformes annulaires en fibres de carbone pour des disques de frein, comprenant des préformes non perforées et une préforme perforée avec une disposition de trous telle que montrée sur la figure 14. La préforme perforée était une préforme de disque rotor ayant des diamètres extérieur et intérieur de 46,8 cm et 26,7 cm respectivement, une épaisseur de 3,5 cm et 576 trous traversants de diamètre 0,5 mm. Les trous ont été formés au jet d'eau sous pression parallèlement à l'axe de la préforme.

La courbe A de la figure 16 montre la variation de la densité mesurée en fonction du rayon du disque obtenu au bout d'un cycle de densification de durée standard, du même ordre de grandeur que dans le cas des Exemples 2 et 3. A titre de comparaison, la courbe B montre la variation de densité mesurée sur un disque obtenu à partir d'une préforme de mêmes dimensions mais non perforée.

On constate que la plus grande densité de trous dans la partie centrale de la préforme permet d'obtenir une grande densité du matériau du disque dans cette partie, alors que le disque obtenu à partir de la préforme non perforée présente un fort gradient de densité avec une valeur minimale dans la partie centrale de la préforme.

## Revendications

1. Procédé de réalisation de pièces en matériau composite comprenant la réalisation d'un substrat fibreux et la densification du substrat par une matrice formée au moins partiellement par un processus de type infiltration chimique en phase gazeuse, des trous s'étendant dans le substrat à partir d'au moins une surface de celui-ci étant formés dans le substrat avant le début de la densification du substrat,
procédé **caractérisé en ce que** les trous sont formés dans le substrat avec effet destructeur sur les fibres par élimination ou enlèvement total de la matière fibreuse, de sorte que les trous formés sont délimités par des zones limites de rupture ou d'élimination des fibres et que l'arrangement des fibres dans le substrat muni de trous est sensiblement non modifié au voisinage des parois des trous par rapport à l'arrangement initial avant formation des trous.

2. Procédé selon la revendication 1, dans lequel les trous sont formés par usinage au jet d'eau sous pression.

3. Procédé selon la revendication 1, dans lequel les trous sont formés par action thermique localisée sur la matière des fibres du substrat.

4. Procédé selon la revendication 3, dans lequel les trous sont formés sous l'effet d'un rayonnement laser.

5. Procédé selon l'une des revendications 3 et 4, dans lequel les trous sont formés par élimination de la matière des fibres par oxydation.

6. Procédé selon la revendication 1, dans lequel les trous sont formés par usinage par outil à grande vitesse.

7. Procédé selon la revendication 1, dans lequel les trous sont formés par découpe.

8. Procédé selon la revendication 1, dans lequel les trous sont formés par électro-érosion.

9. Procédé selon l'une quelconque des revendications 1 à 8, dans lequel le substrat est une préforme annulaire et des trous sont formés qui débouchent sur l'une au moins des faces principales de la préforme.

10. Procédé selon l'une quelconque des revendications 1 à 8, dans lequel le substrat est une préforme annulaire et des trous sont formés qui débouchent au moins sur la surface périphérique externe de la préforme.

11. Procédé selon l'une quelconque des revendications 1 à 10, dans lequel les trous ont un diamètre moyen compris entre 0,05 mm et 2 mm.

12. Procédé selon l'une quelconque des revendications 1 à 11, dans lequel la densité des trous dans le substrat est comprise entre 0,06 trous/cm² et 4 trous/cm².

13. Procédé selon l'une quelconque des revendications 1 à 12, dans lequel la densité des trous dans le substrat est variable.

14. Procédé selon la revendication 13, dans lequel le substrat forme une préforme annulaire pour disque de frein et des trous sont formés qui débouchent sur l'une au moins des faces principales de la préforme, la densité des trous étant variable et décroissante entre une partie centrale du substrat correspondant à une piste de frottement du disque et des parties du substrat adjacentes à ses surfaces circonférentielles interne et externe.

15. Procédé selon l'une quelconque des revendications 1 à 14, dans lequel la distance entre axes de trous voisins est comprise entre 0,5 cm et 4 cm.

16. Substrat fibreux (20) pour la réalisation d'une pièce en matériau composite, comportant des trous qui s'étendent dans le substrat à partir d'au moins une surface de celui-ci,
dans lequel la densité volumique des fibres au voisinage des parois des trous du substrat n'est pas sensiblement supérieure à la densité volumique des fibres dans d'autres parties du substrat, et les trous sont délimités par des zones limites de rupture ou d'élimination des fibres.

17. Substrat selon la revendication 16, dans lequel les trous ont un diamètre moyen compris entre 0,05 mm et 2 mm.

18. Substrat selon l'une quelconque des revendications 16 et 17, dans lequel la densité des trous dans le substrat est comprise entre 0,06 trous/cm² et 4 trous/cm².

19. Substrat selon l'une quelconque des revendications 16 à 18, dans lequel la densité des trous dans le substrat est variable.

20. Substrat selon la revendication 19 formant préforme annulaire pour un disque de frein, dans lequel des trous débouchent sur l'une au moins des faces principales du substrat.

21. Substrat selon la revendication 20, dans lequel la densité des trous est variable et décroissante entre une partie centrale du substrat correspondant à une piste de frottement du disque et des parties du substrat adjacentes à ses surfaces circonférentielles interne et externe.

22. Substrat selon l'une quelconque des revendications 16 à 19, formant préforme annulaire, dans lequel des trous débouchent au moins sur la surface périphérique externe du substrat.

23. Pièce en matériau composite (26) comprenant un renfort fibreux densifié par une matrice obtenue au moins partiellement par un processus de type infiltration chimique en phase gazeuse et présentant des trous (28) qui s'étendent dans la pièce à partir d'au moins une surface de celle-ci, le renfort fibreux étant formé par un substrat selon l'une quelconque des revendications 16 à 22.

## Claims

1. A method of making composite material parts comprising preparing a fiber substrate and densifying the substrate with a matrix formed at least in part by a chemical vapor infiltration type process, holes extending in the substrate from at least one surface thereof being formed in the substrate before densification of the substrate is started,
the method being **characterized in that** the holes are formed in the substrate with a destructive effect on the fibers by eliminating or completely removing the fiber material such that the holes formed are defined by limit zones of fiber elimination or rupture and the arrangement of the fibers in the substrate provided with holes is substantially unchanged in the vicinity of the walls of the holes compared with their initial arrangement prior to the holes being formed.

2. A method according to claim 1, in which the holes are formed by machining with a jet of water under pressure.

3. A method according to claim 1, in which the holes are formed by localized thermal action on the fiber material of the substrate.

4. A method according to claim 3, in which the holes are formed under the effect of laser radiation.

5. A method according to claim 3 or claim 4, in which the holes are formed by eliminating fiber material by oxidation.

6. A method according to claim 1, in which the holes are formed by machining using a high speed tool.

7. A method according to claim 1, in which the holes are formed by cutting out.

8. A method according to claim 1, in which the holes are formed by electro-erosion.

9. A method according to any one of claims 1 to 8, in which the substrate is an annular preform and holes are formed to open out into at least one of the main faces of the preform.

10. A method according to any one of claims 1 to 8, in which the substrate is an annular preform and holes are formed that open out into at least the outer peripheral surface of the preform.

11. A method according to any one of claims 1 to 10, in which the holes are of a mean diameter lying in the range 0.05 mm to 2 mm.

12. A method according to any one of claims 1 to 11, in which the density of the holes in the substrate lies in the range 0.06 holes/cm² to 4 holes/cm².

13. A method according to any one of claims 1 to 12, in which the density of the holes in the substrate varies.

14. A method according to claim 13, in which the substrate forms an annular preform for a brake disk and holes are formed that open out into at least one of the main faces of the preform, the density of the holes varying and decreasing between a central portion of the substrate corresponding to a friction track of the disk and portions of the substrate that are adjacent to the inner and outer circumferential surfaces thereof.

15. A method according to any one of claims 1 to 14, in which the distance between the axes of adjacent holes lies in the range 0.5 cm to 4 cm.

16. A substrate (20) consisting of fibers for making a composite material part, the substrate including holes that extend within the substrate from at least one surface thereof,
in which substrate the density per unit volume of fibers in the vicinity of the walls of the holes in the substrate is not significantly greater than the density per unit volume of the fibers in other portions of the substrate and the holes are defined by limit zones of fiber elimination or rupture.

17. A substrate according to claim 16, in which the holes have a mean diameter lying in the range 0.05 mm to 2 mm.

18. A substrate according to any one of claims 16 and 17, in which the density of holes in the substrate lies in the range 0.06 holes/cm² to 4 holes/cm².

19. A substrate according to any one of claims 16 to 18, in which the density of holes in the substrate varies.

20. A substrate according to claim 19, forming an annular preform for a brake disk, in which the holes open out into at least one of the main faces of the substrate.

21. A substrate according to claim 20, in which the density of holes varies, decreasing between a central portion of the substrate corresponding to a friction track of the disk, and portions of the substrate adjacent to the inner and outer circumferential surfaces thereof.

22. A substrate according to any one of claims 16 to 19, forming an annular preform, in which holes open out at least into the outer peripheral surface of the substrate.

23. A composite material part (26) comprising fiber reinforcement densified by a matrix obtained at least in part by a chemical vapor infiltration type process and presenting holes (28) extending within the part from at least one surface thereof, the fiber reinforcement being formed by a substrate according to any one of claims 16 to 22.

## Patentansprüche

1. Verfahren zur Herstellung von Teilen aus Verbundwerkstoff, umfassend die Ausbildung eines Fasersubstrats und die Verdichtung des Substrats durch eine Matrix, die wenigstens teilweise durch ein Verfahren vom Typ chemische Gasphaseninfiltration gebildet wird, wobei Löcher, die sich in dem Substrat ausgehend von wenigstens einer Fläche dessen erstrecken, vor Beginn der Verdichtung des Substrats in dem Substrat ausgebildet werden,
Verfahren, welches **dadurch gekennzeichnet ist, daß** die Löcher in dem Substrat mit zerstörender Wirkung auf die Fasern durch vollständiges Entfernen oder Abtragen des Fasermaterials ausgebildet werden, so daß die gebildeten Löcher durch Grenzbereiche eines Brechens oder Entfernens der Fasern begrenzt sind und daß die Anordnung der Fasern in dem mit Löchern versehenen Substrat in der Nähe der Wände der Löcher gegenüber der Ausgangsanordnung vor Ausbildung der Löcher im wesentlichen unverändert ist.

2. Verfahren nach Anspruch 1, wobei die Löcher durch Bearbeiten mittels Druckwasserstrahl ausgebildet werden.

3. Verfahren nach Anspruch 1, wobei die Löcher durch lokalisierte Wärmewirkung auf das Material der Fasern des Substrats ausgebildet werden.

4. Verfahren nach Anspruch 3, wobei die Löcher unter der Wirkung einer Laserstrahlung ausgebildet werden.

5. Verfahren nach einem der Ansprüche 3 und 4, wobei die Löcher **dadurch** ausgebildet werden, daß das Material der Fasern durch Oxidation entfernt wird.

6. Verfahren nach Anspruch 1, wobei die Löcher durch Bearbeiten mit einem Hochgeschwindigkeitswerkzeug ausgebildet werden.

7. Verfahren nach Anspruch 1, wobei die Löcher durch Ausschneiden oder - stanzen ausgebildet werden.

8. Verfahren nach Anspruch 1, wobei die Löcher durch Elektroerosion ausgebildet werden.

9. Verfahren nach einem der Ansprüche 1 bis 8, wobei das Substrat ein ringförmiger Vorformling ist und Löcher ausgebildet sind, die an wenigstens einer der Hauptseiten des Vorformlings ausmünden.

10. Verfahren nach einem der Ansprüche 1 bis 8, wobei das Substrat ein ringförmiger Vorformling ist und Löcher ausgebildet sind, die wenigstens an der Außenumfangsfläche des Vorformlings ausmünden.

11. Verfahren nach einem der Ansprüche 1 bis 10, wobei die Löcher einen mittleren Durchmesser im Bereich zwischen 0,05 mm und 2 mm aufweisen.

12. Verfahren nach einem der Ansprüche 1 bis 11, wobei die Dichte der Löcher in dem Substrat zwischen 0,06 Löcher/cm² und 4 Löcher/cm² liegt.

13. Verfahren nach einem der Ansprüche 1 bis 12, wobei die Dichte der Löcher in dem Substrat variabel ist.

14. Verfahren nach Anspruch 13, wobei das Substrat einen ringförmigen Vorformling für eine Bremsscheibe bildet und Löcher ausgebildet sind, die an wenigstens einer der Hauptseiten des Vorformlings ausmünden, wobei die Dichte der Löcher variabel und zwischen einem mittleren Teil des Substrats, der einer Reibspur der Scheibe entspricht, und Teilen des Substrats, die an seine innere und seine äußere Umfangsseite angrenzen, abnehmend ist.

15. Verfahren nach einem der Ansprüche 1 bis 14, wobei der Achsabstand von benachbarten Löchern zwischen 0,5 cm und 4 cm beträgt.

16. Fasersubstrat (20) für die Herstellung eines Teils aus Verbundwerkstoff, umfassend Löcher, die sich in dem Substrat ausgehend von wenigstens einer Fläche dessen erstrecken,
wobei die räumliche Dichte der Fasern in der Nähe der Wände der Löcher des Substrats nicht wesentlich höher als die räumliche Dichte der Fasern in anderen Teilen des Substrats ist, und die Löcher durch Grenzbereiche eines Brechens oder Entfernens der Fasern begrenzt sind.

17. Substrat nach Anspruch 16, wobei die Löcher einen mittleren Durchmesser im Bereich zwischen 0,05 mm und 2 mm aufweisen.

18. Substrat nach einem der Ansprüche 16 und 17, wobei die Dichte der Löcher in dem Substrat zwischen 0,06 Löcher/cm² und 4 Löcher/cm² liegt.

19. Substrat nach einem der Ansprüche 16 bis 18, wobei die Dichte der Löcher in dem Substrat variabel ist.

20. Substrat nach Anspruch 19, das einen ringförmigen Vorformling für eine Bremsscheibe bildet, wobei Löcher an wenigstens einer der Hauptseiten des Substrats ausmünden.

21. Substrat nach Anspruch 20, wobei die Dichte der Löcher variabel und zwischen einem mittleren Teil des Substrats, der einer Reibspur der Scheibe entspricht, und Teilen des Substrats, die an seine innere und seine äußere Umfangsseite angrenzen, abnehmend ist.

22. Substrat nach einem der Ansprüche 16 bis 19, das einen ringförmigen Vorformling bildet, wobei Löcher wenigstens an der Außenumfangsfläche des Substrats ausmünden.

23. Verbundwerkstoffteil (26), das eine Faserverstärkung umfaßt, die durch eine Matrix verdichtet ist, welche wenigstens teilweise durch ein Verfahren vom Typ chemische Gasphaseninfiltration erhalten wird, und das Löcher (28) aufweist, die sich in dem Teil ausgehend von wenigstens einer Fläche dessen erstrecken, wobei die Faserverstärkung von einem Substrat nach einem der Ansprüche 16 bis 22 gebildet ist.
